# EUROPEAN PATENT APPLICATION

(11) **EP 1 967 344 A2**
(43) Date of publication of application: **10.09.2008**
(21) Application number: 08101982.0
(22) Date of filing: 26.02.2008
(51) Int. Cl.: B29C 44/44, B29C 44/58

(54) **Method and device for the production of expanded polystyrene blocks**

(30) Priority: 08.03.2007 IT PS20070011
(71) Applicant: Candiracci, Angelo, 61032 Fano (PU) (IT)
(72) Inventor: Candiracci, Angelo, 61032 Fano (PU) (IT)
(74) Representative: Gustorf, Gerhard

(57) **Abstract**

Method and device for the production of expanded polystyrene blocks, comprising expansion of the loose mass (7) of polystyrene spheres within a polyhedral mould (2-3), one face of which is formed by the end surface (9) of the previously produced block of polystyrene (8), bonding the newly expanded block (7-8) to this end (9)as one and the same substance, advancement of the block (8) until it becomes an end (9) for another block, and so on, thus producing a continuous block (8) which can be cut to any size without generating waste or scrap.

## Description

### DETAILED DESCRIPTION

### State of the art

Expanded polystyrene is usually produced in parallelepiped blocks and supplied in that form to users, who then cut them to form sheets or the various three-dimensional shapes required to suit their specific needs.

These blocks are shaped inside moulds, entirely perforated by a network of holes, inside which a suitable quantity of loose polystyrene spheres is poured. These are then hit, basically on all sides, by a jet of steam which penetrates the perforated walls of the mould and causes the expansion of the mass, the reciprocal cohesion of the expanded spheres to form a single body and the whole to take on the shape of a parallelepiped block, adhering to the sides of the mould and governed by it.

In the specific case of the material's use for the production of panels, particularly for the construction sector, sheets are cut from these blocks with a length (usually corresponding to the height of the installed panel) which obviously depends on the length of the block produced in this way.

In this sense, the blocks and the relative moulds have a limited range of standard lengths, basically corresponding to the most common heights of the panels which are obtained from them. As a result, when the height of the panels does not exactly match one of the limited range of available lengths, as often happens, a certain amount of material must be cut away , consequently producing scrap and waste with loss of materials and relative problems of disposal.

### Purposes of the invention

The main purpose of this invention is, in this sense, to provide a method, with relative device for its implementation, for the production of parallelepiped polystyrene blocks with a preset length corresponding to the required height of the panels to be obtained by cutting them.

Another purpose of this invention is to achieve the previous purpose by means of a procedure, with relative device for its implementation, which does not subvert previous technology but is added as an original innovation in order to minimise implementation costs and exploit previous knowledge of the technology, as well as the relative downline and upline equipment and plants.

A further purpose of this invention is to achieve the previous purposes by means of a simple and functional procedure, with relative device for its implementation, that are safe to use and relatively cheap in comparison with the results attained.

### Summary of the invention

These and other purposes are all achieved with the method and device for the production of expanded polystyrene blocks as per this invention, comprising expansion of the loose mass (7) of polystyrene spheres within a polyhedral mould (2-3), one face of which comprises the end surface (9) of the previously produced block of polystyrene (8), bonding to link the newly expanded block (7-8) to this end (9), advancement of the block (8) until it becomes an end (9) for another block, and so on, thus producing a continuous block (8) which can be cut to any size without generating waste or scrap.

### Brief description of the drawings

The additional characteristics and advantages of the method and relative device for its implementation as per this invention become clearer in the following detailed description of its preferred, but not exclusive, form of implementation, represented purely for the sake of example in the two attached drawings, in which:
figure 1 shows a partial cross-section of a version of the device for the implementation of the method as per this invention, in an initial operative arrangement of the relative parts;

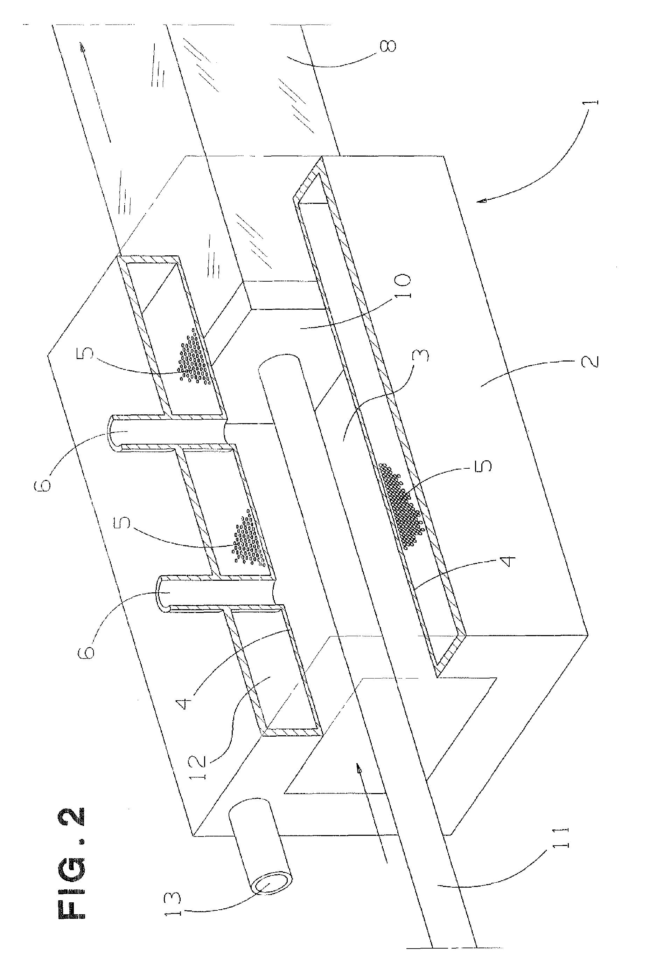

figure 2 shows a partial cross-section of a version of the device for the implementation of the method as per this invention, in a second operative arrangement of the relative parts.

### Static description of the preferred embodiment

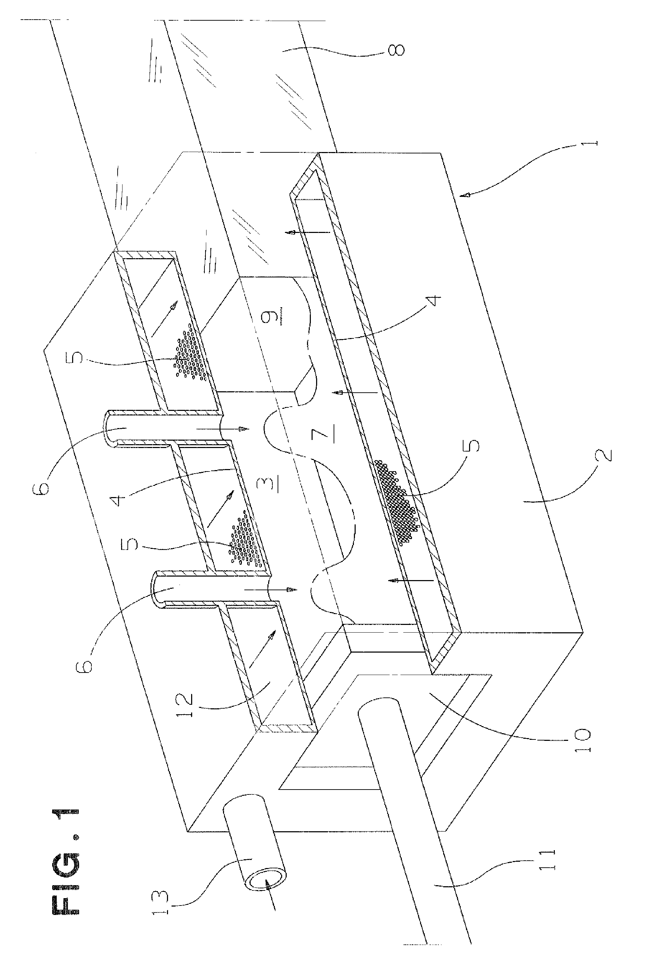

With reference to these figures, figure 1 in particular shows a diagram of a device 1 for the production of expanded polystyrene blocks, comprising a parallelepiped mould 2 containing an expansion chamber 3 with the same shape.

The long sides of the parallelepiped mould 2 are made from pieces of sheet metal 4 perforated by a network of holes 5 over its entire area, even though the diagram only shows perforated portions for the sake of example.

The upper ducts 6 entering the expansion chamber 3 are used to introduce a pre-batched mass 7 of loose polystyrene spheres, two of which are shown for the sake of example, which, following the procedure detailed below, come together to form a single parallelepiped block 8.

The ducts 6 are connected to overhead sphere feeding and batching devices, such as hoppers and volumetric batchers, not shown in the diagram, and fitted with underlying valves, gate valves or another method of closure, not shown in the diagram, lying flush with the upper piece of sheet metal 4.

The short sides of the parallelepiped mould 2 are formed distally by the bottom 9 or end of the parallelepiped block of pre-shaped expanded polystyrene 8 and proximally by plate 10, suitably shaped by a pusher 11, which is driven by any known device appropriate for this purpose.

Around the long sides 4 of the parallelepiped mould 2, there is a gap 12 for the forced circulation of steam, introduced by at least one duct 13, generated and pressurised by any known device appropriate for this purpose, for the functions described below.

### Dynamic description of the preferred embodiment

After terminating the static description of a preferred realisation example of a device for the implementation of the method as per this invention, as described below, we shall now move on to the dynamic description, that is, the relative means of operation of the method:
a pre-batched quantity 7 of loose polystyrene spheres is introduced into the mould 2 through the upper ducts 6; once the required quantity has been introduced, steam is force circulated inside the gap 12 and penetrates the expansion chamber 3 through the network of holes 5 in the long sides 4 of the mould 2;
being affected on all sides by the jet of steam, the loose mass 7, by known reaction, expands inside the mould 2 to take on the parallelepiped shape of the chamber 3;
as a result of this reaction, the expanding mass 7 touches the end 9 of the polystyrene block 8, kept there for this reason, inextricably bonding to it as one and the same substance;
at this point the mobile plate 10 of the pusher 11 moves forwards, displacing the newly formed block 8 bonded to the previous block 8, until the relative end 9 becomes the link for a newly expanded block 8, and so on until a continuous block 8 is produced which can be cut to any size without generating waste or scrap.

### Alternative configurations

Of course, in alternative forms of implementation, though related to the realisation concept illustrated above and claimed below, the method and relative implementation device as per this invention can also be implemented and realised in a different way, with technical and mechanical equivalents or additional adaptations, which still re-enter in the realisation concept illustrated above and claimed below.

### Advantages of the invention

As can be seen from the detailed description given above of a preferred but not exclusive form of realisation, and from the above indication of alternative forms of implementation, the method and relative device for its implementation as per this invention offer the advantages of the pre-established objectives and others as well:
they are, in fact, an innovative method for the realisation of pieces of expanded polystyrene, especially panels, with maximum limitation of scrap and waste, and therefore without loss of materials and waste disposal problems, while at the same time not substantially subverting known production techniques. In this way, the innovation can easily be implemented by production plants according to known techniques without excessive adjustment costs in comparison to the advantages achieved.

## Claims

1. Method for the production of expanded polystyrene blocks, **characterised by** the fact that it comprises expansion of the loose mass (7) of polystyrene spheres within a polyhedral mould (2-3), one face of which comprises the end surface (9) of the previously produced block of polystyrene (8), bonding to link the newly expanded block (7-8) to this end (9), advancement of the block (8) until it becomes an end (9) for another block, and so on, thus producing a continuous block (8) which can be cut to any size without generating waste or scrap.

2. Device for the production of expanded polystyrene blocks in implementation of the method indicated in the previous claim, **characterised by** the fact that it comprises an expansion chamber (3) of a loose mass (7) of polystyrene spheres, one wall of which comprising the end surface (9) of the previously produced block of polystyrene (8), while the opposite wall (10) is mobile to allow the piece to be removed from said expansion chamber (3).

3. Device as per the previous claim, **characterised by** the fact that it comprises:
- a parallelepiped mould (2) containing a similarly shaped expansion chamber (3);
- a piece of sheet metal (4) perforated by a network of holes (5) over its entire area comprising the long sides of said parallelepiped mould (2) surrounded by a gap (12) for the forced circulation of steam;
- feed devices (6) for the introduction of a pre-batched mass (7) of loose expanded polystyrene spheres inside said expansion chamber (3);
- the bottom (9) of a parallelepiped block (8) of pre-shaped expanded polystyrene constituting one short side (9) of said parallelepiped mould (2);
- a mobile wall (10) moved by pushers (11) constituting the other short side (10) of said parallelepiped mould (2).
